# EUROPÄISCHE PATENTANMELDUNG

(11) **EP 4 450 725 A1**
(43) Veröffentlichungstag der Anmeldung: **23.10.2024**
(21) Anmeldenummer: 24167983.6
(22) Anmeldetag: 02.04.2024
(51) Int. Cl.: E04B 1/76, E04F 13/08, F16B 5/02

(54) **ABSTANDHALTER**

(30) Priorität: 20.04.2023 DE 102023110054
(71) Anmelder: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(57) **Zusammenfassung**

Die Erfindung betrifft einen Abstandhalter 1 zur Befestigung eines Gegenstands 2 an einem Baukörper 3, wobei der Baukörper 3 einen Verankerungsgrund 4 und einen daran angeordneten Dämmkörper 5 aufweist, und der Abstandhalter 1 derart gestaltet ist, dass er sich in einem montierten Zustand entlang einer Längsachse 6 durch den Dämmkörper 5 hindurch in den Verankerungsgrund 4 erstreckt. Erfindungsgemäß umfasst der Abstandhalter 1 ein Auflagerelement 9, das eine Auflagefläche 8 zur flächigen Auflage des Gegenstands 2 aufweist und das zur Montage des Abstandhalters 1 relativ zum Verbindungselement 7 um eine Schwenkachse 10 schwenkbar ist, die quer zu Längsachse 6 verläuft.

## Beschreibung

Die Erfindung betrifft einen Abstandhalter mit den Merkmalen des Oberbegriffs des Anspruchs 1.

Aus dem Europäischen Patent EP 1 724 412 B1 ist ein Abstandhalter zur Befestigung eines Gegenstands an einem Baukörper bekannt. Der Abstandhalter weist eine Gewindestange als Ankerelement auf, auf die ein Verbindungselement aus Kunststoff als Isolationselement aufgeschraubt ist. Zum Befestigen des Gegenstands an dem Baukörper mithilfe dieses bekannten Abstandhalters wird zunächst ein Bohrloch in dem Baukörper erstellt, danach ein geeigneter Klebstoff in das Bohrloch eingebracht und dann der Abstandhalter drehend in das Bohrloch eingeschraubt, wodurch sich der Klebstoff gleichmäßig um das Ankerelement verteilt und sich das Verbindungselement in einen Dämmkörper des Baukörpers einschneidet. Der Dämmkörper besteht im Regelfall aus geschäumtem Polystyrol. Der Gegenstand, beispielsweise eine Markise oder eine Lampe, wird nach der Montage des Abstandhalters an das Verbindungselement angeschraubt, so dass der Gegenstand am Verbindungselement anliegt.

Aus der europäischen Patentanmeldung EP 1 936 065 A1 ist ein weiterer Abstandhalter zur Befestigung eines Gegenstands an einem Baukörper bekannt. Der Abstandhalter weist eine Stockschraube als Ankerelement auf, auf die ein Verbindungselement aus Kunststoff als Isolationselement aufgeschraubt ist. Der bekannte Abstandhalter umfasst zudem eine Abdeckkappe, an deren Umfang nach außen abstehende Rippen angeordnet sind. Die Abdeckkappe wird nach der Montage des Verbindungselements im Baukörper auf einen Außenmehrkant des Verbindungselements, der das hintere Ende des Verbindungselements bildet, formschlüssig aufgesetzt. Die Rippen der Abdeckkappe greifen nach dem Aufsetzen der Abdeckkappe in den Baukörper ein. Durch den Eingriff in den Baukörper und den Formschluss zwischen der Abdeckkappe und dem Außenmehrkant wirkt die Abdeckkappe als Drehsicherungselement, das ein Drehen des Verbindungselements beim Befestigen des Gegenstands am Abstandhalter verhindert. Zudem bildet das hintere Ende der Abdeckkappe eine Auflagefläche für den zu befestigenden Gegenstand.

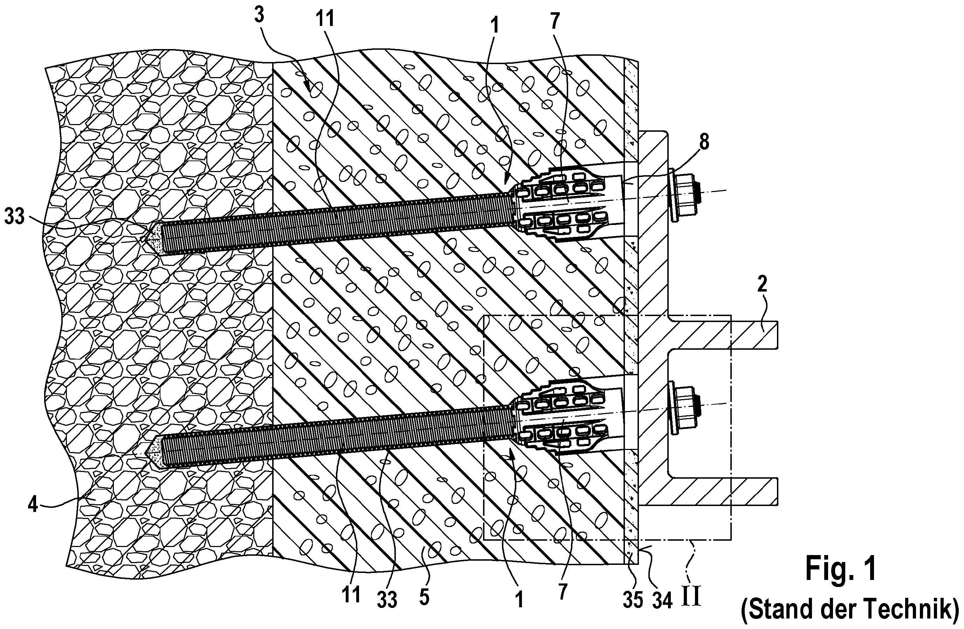

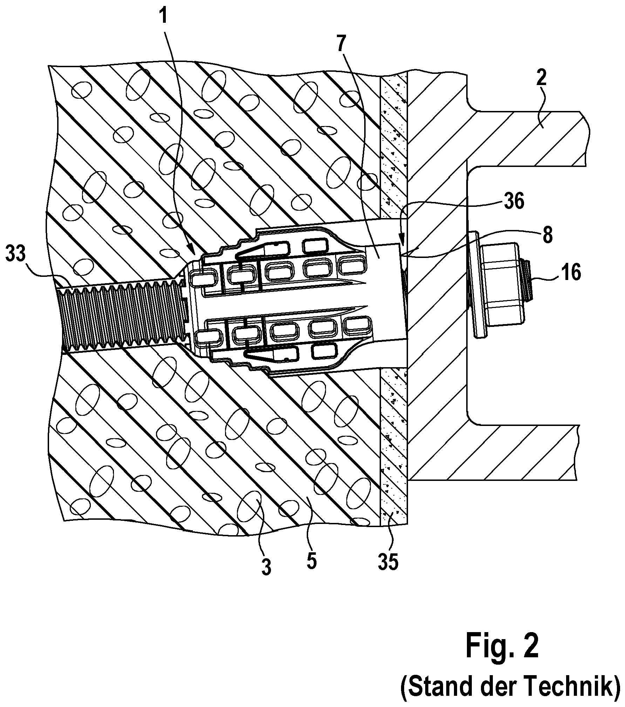

Nachteilig an den bekannten Abstandhaltern ist, dass die Bohrungen, in die die Abstandhalter bei der Montage in einen Baukörper eingebracht werden, möglichst orthogonal zu einer Außenfläche des Baukörpers verlaufend hergestellt werden müssen, da sonst keine flächige Anlage eines zu befestigenden Gegenstands am Abstandhalter möglich ist. Dies kann unter Baustellenbedingungen jedoch nicht immer gewährleistet werden. Auch wenn ein Abstandhalter ohne Vorbohren in den Baukörper eingeschraubt wird, kann es zu einer Schrägstellung des Abstandhalters gegenüber der Außenfläche des Baukörpers kommen. In den Figuren 1 und 2 der Zeichnung ist beispielhaft diese in der Praxis häufig vorkommende Einbausituation mit einer Schiefstellung der Abstandhalter 1 dargestellt:
Die Figuren 1 und 2 zeigen einen bekannten Abstandhalter 1 nach der Montage in einem Baukörper 3. Der Abstandhalter 1 weist eine Gewindestange als Ankerelement 11 und ein Verbindungselement 7 aus Kunststoff auf. Der Abstandhalter 1 dient zum Befestigen eines Gegenstands 2 an dem Baukörper 3. Der Baukörper 3 besteht typischerweise aus einem Verankerungsgrund 4, beispielsweise aus Stahlbeton, auf dem ein Dämmkörper 5, beispielsweise aus geschäumtem Polystyrol, angeordnet ist. Auf den Dämmkörper 5 ist eine Putzschicht 35 aufgebracht, die die Außenfläche 34 des Baukörpers 3 bildet und die den Dämmkörper 5 vor Witterungseinflüssen, insbesondere vor Feuchtigkeit schützt. Zur Montage des Gegenstands 2 am dargestellten Baukörper 3 wurden zwei Bohrungen 33 in den Baukörper 3 eingebracht. Wie zu sehen ist, wurden die beiden Bohrungen 33 versehentlich nicht orthogonal zur Außenfläche 34 des Baukörpers 3 gebohrt, sondern etwas schräg unter einem Winkel zur Außenfläche 34. Eine derartige Schrägstellung kann in der Baupraxis nie ganz ausgeschlossen werden. Die Schrägstellung führt dazu, dass der Gegenstand 2 nach der Montage nicht vollständig an einer Auflagefläche 8 des Verbindungselements 7 aufliegen kann, sondern nur lokal oder punktuell, sodass ein Spalt 36 zwischen der Auflagefläche 8 und dem zu befestigenden Gegenstand 2 vorhanden ist. Der Spalt 36 erfordert eine gegenüber einer planmäßigen Montage aufwändigere Abdichtung zwischen der Putzschicht 35, dem Verbindungselement 7 und dem Gegenstand 2. Wird die Abdichtung nicht oder unzureichend erstellt, so begünstigt der Spalt 36 ein Eindringen von Feuchtigkeit in die Bohrung 33, was die Dauerhaftigkeit der Befestigungsanordnung, die aus dem Baukörper 3 und dem Abstandhalter 1 besteht, gefährdet.

Aufgabe der Erfindung ist es daher, einen Abstandhalter zur Verfügung zu stellen, bei dem eine Spaltbildung zwischen dem Gegenstand und dem Baukörper aufgrund einer Schrägstellung des Abstandhalters ausgeschlossen ist.

Diese Aufgabe wird erfindungsgemäß durch einen Abstandhalter mit den Merkmalen des Anspruchs 1 gelöst. Die abhängigen Ansprüche haben vorteilhafte Ausgestaltungen und Weiterbildungen der Erfindung zum Gegenstand.

Der erfindungsgemäße Abstandhalter dient zur Befestigung eines Gegenstands an einem Baukörper. Der Baukörper umfasst einen Verankerungsgrund und einen daran angeordneten Dämmkörper. Der Verankerungsgrund ist beispielsweise eine Wand aus Stahlbeton, Mauerwerk oder einem Holzwerkstoff. Der Dämmkörper besteht beispielsweise aus geschäumtem Polystyrol. Auf dem Dämmkörper kann eine Putzschicht angeordnet sein, die die Außenfläche des Dämmkörpers und somit des Baukörpers bildet. Der Abstandhalter kann, abhängig vom Verankerungsgrund und der Ausgestaltung des Abstandhalters, in ein durch die Putzschicht und den Dämmkörper hindurch im Verankerungsgrund hergestelltes Bohrloch eingebracht oder ohne Vorbohren in den Verankerungsgrund eingeschraubt werden.

Der Abstandhalter umfasst ein Ankerelement und ein Verbindungselement und weist eine Auflagefläche auf, die zur flächigen Auflage des Gegenstands am Abstandhalter im montierten Zustand dient. Der "montierte Zustand" ist der Zustand, in dem der Abstandhalter im Verankerungsgrund verankert ist und zur Montage eines Gegenstand ein Auflager für den Gegenstand bildet.

Der Abstandhalter ist derart gestaltet, dass er sich in einem montierten Zustand entlang einer Längsachse durch den Dämmkörper hindurch in den Verankerungsgrund erstreckt. Insbesondere erstreckt sich das Ankerelement, beispielsweise eine Gewindestange oder eine Schraube, das im montierten Zustand, also nach der planmäßigen Montage des Ankerelements, im Verankerungsgrund verankert ist, entlang der Längsachse. Die Längsachse bildet insbesondere auch die Längsachse des Ankerelements. Das Ankerelement besteht insbesondere aus Stahl, kann aber auch aus einem Kunststoff hergestellt sein, der insbesondere faserverstärkt ist. Beispielsweise ist das Ankerelement eine Gewindestange, die in ein vorgebohrtes Bohrloch eingesteckt und darin mit Klebstoff verankert werden kann. Alternativ kann das Ankerelement beispielsweise eine selbstschneidende Schraube sein, die ohne Vorbohren in einen Verankerungsgrund aus einem Holzwerkstoff eingeschraubt werden kann.

Das Verbindungselement ist im montierten Zustand und nach der Montage eines Gegenstand am Abstandhalter zwischen dem Gegenstand und dem Ankerelement angeordnet. Es kann aus Stahl hergestellt sein, beispielsweise dann, wenn das Ankerelement aus einem isolierenden Kunststoff hergestellt ist. Für den Fall, dass das Ankerelement aus Stahl hergestellt ist, ist das Verbindungselement vorzugsweise aus einem Kunststoff, insbesondere aus einem faserverstärkten Kunststoff, hergestellt. Ein Verbindungselement aus Kunststoff wirkt als Isolationselement zwischen dem Gegenstand und dem Ankerelement und reduziert den Wärmedurchgang des Abstandhalters, indem es das Ankerelement und den Gegenstand thermisch trennt.

Das Ankerelement ist auf einer der Auflagefläche abgewandten Vorderseite des Verbindungselements angeordnet. Die Vorderseite des Verbindungselements ist somit im montierten Zustand dem Verankerungsgrund zugewandt, während eine Rückseite dem zu montierenden Gegenstand zugewandt ist. Das Verbindungselement weist eine Ankeröffnung zur Aufnahme des Ankerelements auf, in der nach der planmäßigen Montage das Ankerelement derart aufgenommen ist, dass das Ankerelement zug- und druckfest mit dem Verbindungselement verbunden ist. Hierzu weist das Ankerelement beispielsweise ein Außengewinde und das Verbindungselement in seiner Ankeröffnung ein zum Außengewinde korrespondierendes Innengewinde auf. Alternativ oder zusätzlich ist eine Verklebung zwischen dem Ankerelement und dem Verbindungselement in der Ankeröffnung möglich. Weitere alternative Ausgestaltungen, wie beispielsweise eine Bajonettverbindung, sind nicht ausgeschlossen.

Erfindungsgemäß umfasst der Abstandhalter ein Auflagerelement, das die Auflagefläche aufweist und das zur Montage des Abstandhalters relativ zum Verbindungselement um eine Schwenkachse schwenkbar ist, die quer zur Längsachse verläuft. Insbesondere ist das Auflagerelement derart mit dem Verbindungselement verbunden, dass es zur Montage um mehrere verschiedene Schwenkachsen relativ zum Verbindungselement schwenkbar ist, wobei jede der Schwenkachsen quer zur Längsachse verläuft, insbesondere orthogonal zur Längsachse. Durch die Verwendung eines relativ zum Verbindungselement schwenkbaren Auflagerelements kann eine Schrägstellung des Ankerelements zur Außenfläche ausgeglichen werden, so dass der Gegenstand flächig an der Auflagefläche des Auflagerelements anliegen und sicher stabil am Abstandhalter befestigt werden kann.

Das Auflagerelement ist insbesondere ein eigenständiges Bauteil, das unabhängig vom Verbindungselement hergestellt wird. Auflagerelement und Verbindungselement sind insbesondere zwei einzelne Teile. Das Auflagerelement ist beispielsweise aus Kunststoff im Spritzgussverfahren hergestellt. Durch die Ausbildung des Auflagerelements als gesondertes Bauteil ist ein einfacher, montagefreundlicher und kostengünstiger Aufbau des Abstandhalters möglich. Das Auflagerelement ist insbesondere auf einer der Vorderseite abgewandten Rückseite des Verbindungselements angeordnet.

In einer bevorzugten Ausgestaltungsform des erfindungsgemäßen Abstandhalters weist das Verbindungselement eine Befestigungsöffnung zur Aufnahme eines Befestigungselements auf. Die Befestigungsöffnung befindet sich insbesondere auf der Rückseite des Verbindungselements. Das Befestigungselement ist beispielsweise eine Befestigungsschraube oder ein Gewindestift, mit der, beziehungsweise mit dem, der Gegenstand am Verbindungselement befestigt werden kann. Hierzu weist die Befestigungsöffnung insbesondere ein Innengewinde auf, das zu einem Außengewinde des Befestigungselements korrespondiert. Die Befestigungsöffnung erstreckt sich entlang einer Befestigungsachse, die sich insbesondere in Richtung oder parallel zur Längsachse erstreckt. Das Auflagerelement ist relativ zur Befestigungsachse schwenkbar, sodass auch bei einer Schrägstellung die Auflagefläche derart zum Gegenstand ausgerichtet werden kann, dass der Gegenstand flächig an der Auflagefläche aufliegt.

Weiterhin ist bevorzugt, dass am Auflagerelement ein Dichtelement angeordnet ist. Das Dichtelement dient zur abdichtenden Anlage am Dämmkörper und ist beispielsweise ein umlaufender Dichtring oder eine flächige Dichtscheibe, beispielsweise aus Ethylen-Propylen-Dien-Kautschuk (EPDM). Durch die Anordnung am Auflagerelement, das erfindungsgemäß zum Verbindungselement schwenkbar ist, ist gewährleistet, dass der Dichtring im montierten Zustand flächig am Außenputz anliegt und somit die Abdichtung auch bei einer Schrägstellung des Ankerelements planmäßig erfolgt.

Insbesondere ist das Auflagerelement auch relativ zum Verbindungselement um die Längsachse drehbar. Ist ein Dichtelement am Auflagerelement angeordnet und ist das Auflagerelement bereits bei der Montage des Verbindungselements am Verbindungselement angeordnet, hat dies den Vorteil, dass das Dichtelement bei der Montage des Abstandhalters nicht zwangsweise mit dem Verbindungselement bei einem Einschrauben oder Eindrehen mitgedreht wird. Das zwangsweise Drehen des Dichtelements würde nämlich zu einer Beschädigung des Dichtelements führen, wenn das Dichtelement unter Rotation den rauen Außenputz berührt und beim Weiterdrehen gegen den Außenputz gedrückt wird.

Vorzugsweise ist das Auflagerelement auf das Verbindungselement derart aufsteckbar, dass das Auflagerelement im aufgesteckten Zustand um die Schwenkachse schwenkbar ist. Insbesondere ist das Auflagerelement zudem um die Längsachse drehbar. Zum Aufstecken sind am Auflagerelement und/oder am Verbindungselement Rastelemente und entsprechende Aufnahmen ausgebildet. Insbesondere weist das Auflagerelement mindestens ein Rastelement und das Verbindungselement mindestens eine Aufnahme für das Rastelement auf. Insbesondere sind am Auflagerelement mehrere Rastelemente vorgesehen, insbesondere in der Form von elastisch federnden, kragarmförmigen Füßen, und am Verbindungselement eine in Umfangsrichtung umlaufende Aufnahmenut, die die Aufnahme für die Rastelemente bildet. Die Rastelemente sind in der Aufnahme insbesondere mit Spiel angeordnet, sodass die Dreh- und Schwenkbarkeit gewährleistet ist.

Damit das Auflagerelement zum Verbindungselement schwenkbar ist, aber trotzdem zur Kraftübertragung eine flächige Anlage zwischen dem Verbindungselement und dem Auflagerelement möglich ist, weist das Verbindungselement in einer bevorzugten Ausgestaltungsform an seiner dem Auflagerelement zugewandten Rückseite eine kalottenförmige Schwenkfläche auf, auf der vorzugsweise mindestens eine Rippe angeordnet ist, die ein Teil der Schwenkfläche bildet. Insbesondere bilden mehrere Rippen die konische Schwenkfläche. Das Auflagerelement weist insbesondere eine korrespondierende Gegenfläche auf, mit der es an der Schwenkfläche aufliegt. Weiterhin ist bevorzugt, dass das Auflagerelement eine äußere Seite eine innere Seite aufweist. Die äußere Seite des Auflagerelements ist der Schwenkfläche abgewandt, seine innere Seite ist der Schwenkfläche zugewandt. Zudem weist das Auflagerelement mindestens ein erstes Schneidelement auf, das insbesondere als ringförmig umlaufende Stufe ausgebildet ist. Dieses erste Schneidelement steht im montierten Zustand in Eingriff mit der Schwenkfläche, beispielsweise, in dem es bei der Montage in die Schwenkfläche eingreift, insbesondere in die zur Schwenkfläche gehörende Rippe eingedrückt wird oder einschneidet. Durch das Eingreifen werden das Auflagerelement und das Verbindungselement zueinander fixiert, um eine feste Verbindung zu gewährleisten.

Bei einer bevorzugten Ausgestaltungsform weist der erfindungsgemäße Abstandhalter eine Auflagescheibe auf, die zumindest einen Teil der Auflagefläche bildet. Die Auflagescheibe ist insbesondere eine Art Unterlegscheibe aus Stahl, insbesondere aus Edelstahl. Die Auflagescheibe ist insbesondere an der äußeren Seite des Auflagerelements angeordnet, die insbesondere eine Vertiefung zur Aufnahme der Auflagescheibe aufweist. Die Auflagescheibe dient zur Kraftverteilung von Druckkräften, die im Auflagerelement und auf die Schwenkfläche wirken. Insbesondere steht die Auflagescheibe im montierten Zustand in direktem Kontakt mit dem Gegenstand und liegt insbesondere flächig an ihm an.

Weiterhin ist bevorzugt, dass der Abstandhalter eine Befestigungsscheibe aufweist, mit einer Anlagefläche zur Anlage an einer der Auflagefläche abgewandten Seite des Gegenstands und mit einer der Anlagefläche abgewandten Seite, die mindestens ein zweites Schneidelement aufweist, das insbesondere als ringförmig umlaufende Stufe ausgebildet. Die Befestigungsscheibe wird mithilfe eines Befestigungselements, das im Verbindungselement befestigt wird, beispielsweise einer Befestigungsschraube oder einem Gewindestift mit aufgeschraubter Mutter, gegen den Gegenstands gedrückt, wodurch der Gegenstand gegen das Auflagerelement verspannt wird. Der Abstandhalter weist vorzugsweise eine kalottenförmige Schwenkfläche mit einer Kalottenfläche auf. Vorzugsweise ist die Kalottenfläche dem zweiten Schneidelement der Befestigungsscheibe derart zugewandt, dass im montierten Zustand das zweite Schneidelement mit der Kalottenfläche in Eingriff ist, sodass im montierten Zustand die kalottenförmige Schwenkfläche und die Befestigungsscheibe zueinander fixiert sind. Auf der Kalottenfläche ist insbesondere ein rippenartiger Steg ausgebildet, in den das zweite Schneidelement im montierten Zustand zur Fixierung einschneidet. Die Bezeichnung als "zweites Schneidelement" ist hier in Abgrenzung zum ersten Schneidelement gewählt, das am Auflagerelement ausgebildet sein kann. Es können jeweils ein oder mehrere Schneidelemente vorgesehen sein.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels aufweisen, sind möglich.

Die Erfindung wird nachfolgend anhand eines Ausführungsbeispiels erläutert, das in der Zeichnung dargestellt ist. Die Zeichnung umfasst folgende Figuren:
- Figur 1: eine Befestigungsanordnung mit aus dem Stand der Technik bekannten Abstandhaltern in einer Schnittdarstellung;
- Figur 2: eine vergrößerte Detaildarstellung des Ausschnitts II der Figur 1;
- Figur 3: eine Befestigungsanordnung mit zwei erfindungsgemäßen Abstandhaltern in einer Schnittdarstellung;
- Figur 4: eine vergrößerte Detaildarstellung des Ausschnitts IV der Figur 3;
- Figur 5: eine perspektivische Ansicht eines Verbindungselements des erfindungsgemäßen Abstandhalters;
- Figur 6: eine perspektivische Ansicht eines Auflagerelements mit Auflagescheibe;
- Figur 7: eine perspektivische Schnittdarstellung durch das Auflagerelement mit einem daran angeordneten Dichtelement und Auflagescheibe;
- Figur 8: eine perspektivische Darstellung des Auflagerelements mit Blick auf die innere Seite des Auflagerelements;
- Figur 9: ein Axialschnitt durch das Verbindungselement der Figur 5 mit aufgestecktem Auflagerelement der Figur 6 mit Dichtelement und Auflagescheibe;
- Figur 10: eine perspektivische Ansicht einer Befestigungsscheibe des erfindungsgemäßen Abstandhalters; und
- Figur 11: eine perspektivische Ansicht einer Kalottenscheibe des erfindungsgemäßen Abstandhalters.

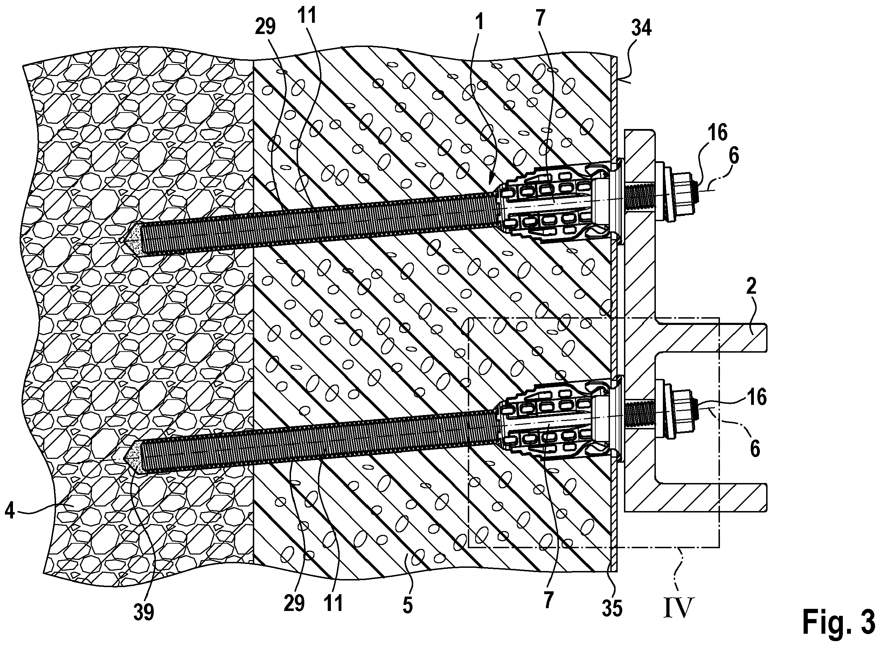

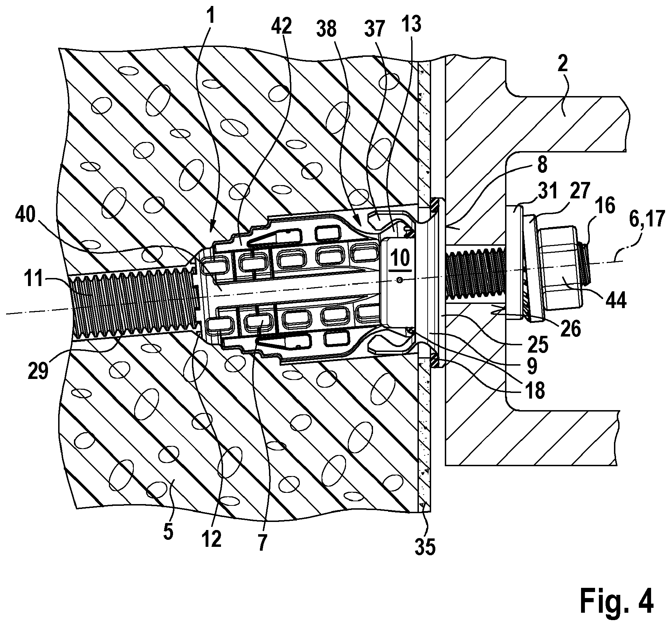

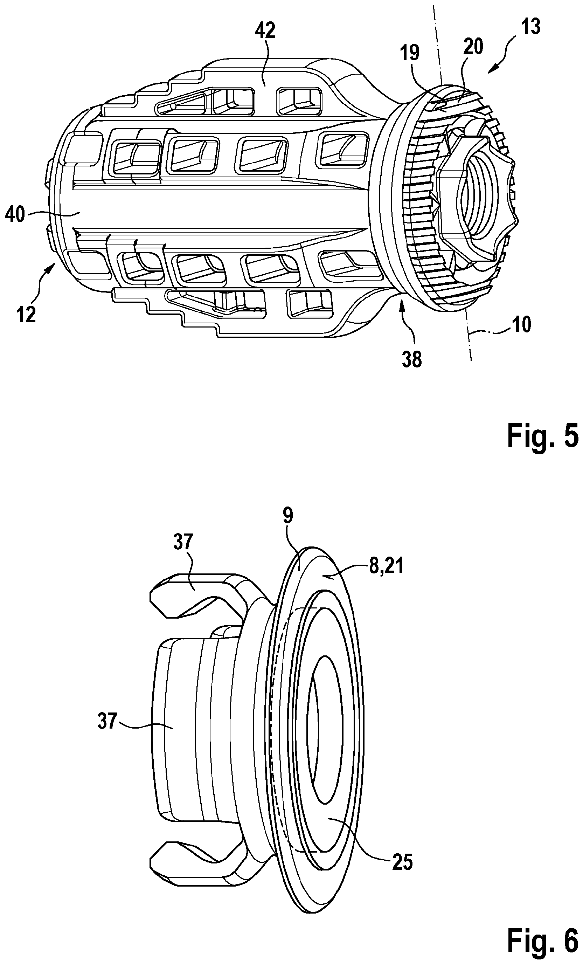

In den Figuren 3 bis 11 ist ein erfindungsgemäßer Abstandhalter 1 dargestellt. Die Figuren 3 und 4 zeigen den Abstandhalter 1 in einem montierten Zustand, während in den Figuren 5 bis 11 einzelne Bauteile des Abstandhalters 1 dargestellt sind.

Mit dem erfindungsgemäßen Abstandhalter 1 kann ein Gegenstand 2 an einem Baukörper 3 befestigt werden. In Figur 3 ist der Gegenstand 2 ein Halter für eine Markise, der mit zwei erfindungsgemäßen Abstandhaltern 1 an einem Baukörper 3 befestigt ist. Der Baukörper 3 besteht im Ausführungsbeispiel aus einem Verankerungsgrund 4 aus Stahlbeton mit einem Wärmedämmverbundsystem. Das Wärmedämmverbundsystem besteht aus einem Dämmkörper 5 aus geschäumten Polystyrolplatten und einer auf dem Dämmkörper 5 aufgebrachten Putzschicht 35, die die Außenfläche 34 des Baukörpers 3 bildet.

Die beiden zur Befestigung des Gegenstands 2 verwendeten Abstandhalter 1 sind gleich aufgebaut. Jeder der Abstandhalter 1 weist eine Gewindestange aus Stahl mit metrischen Außengewinde 29 als Ankerelement 11 auf. Das Ankerelement 11 erstreckt sich entlang einer Längsachse 6, die, wie in Figur 3 zu sehen, im montierten Zustand durch den Dämmkörper 5 hindurch in den Verankerungsgrund 4 reicht. Der Abstandhalter 1 besteht im Ausführungsbeispiel aus mehreren Teilen, nämlich dem Ankerelement 11, einem Verbindungselement 7 aus faserverstärktem Kunststoff und einem Auflagerelement 9, das ebenfalls aus Kunststoff hergestellt ist, und in dem eine Auflagescheibe 25 aus Edelstahl angeordnet ist.

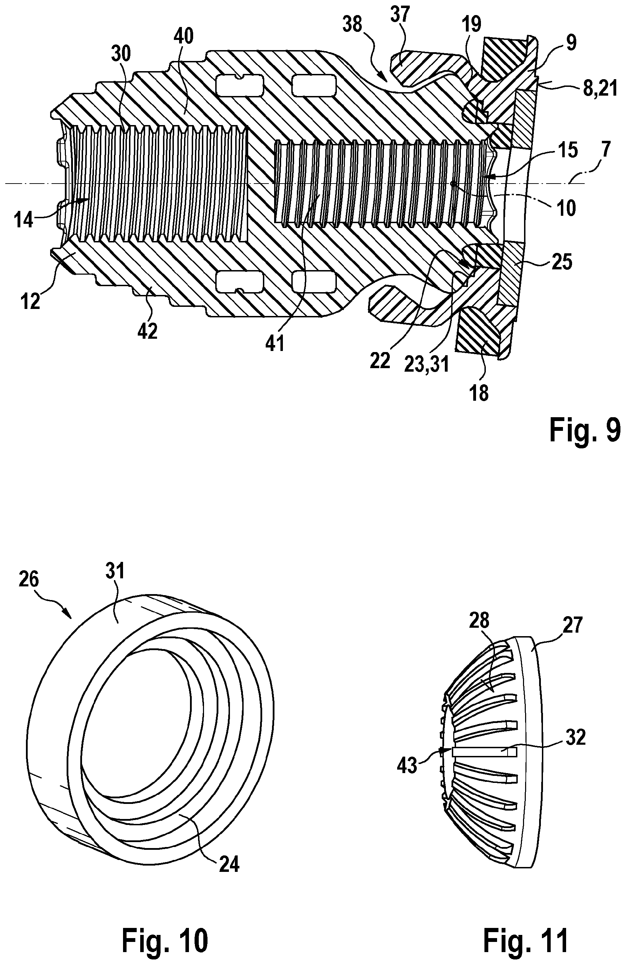

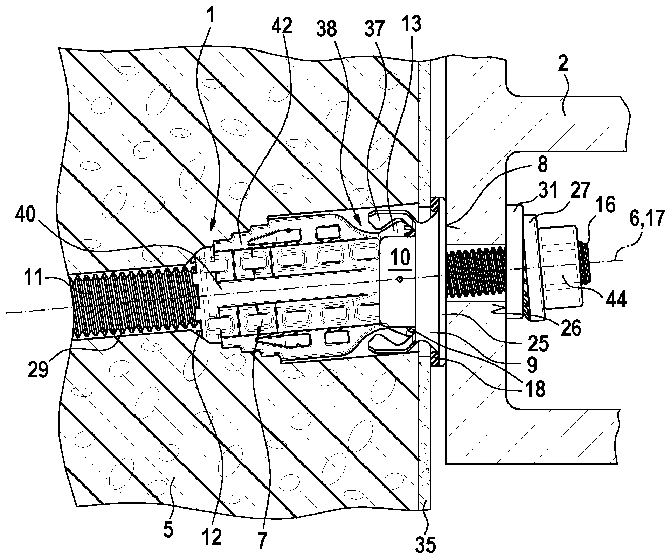

Das Verbindungselement 7 ist in Figur 5 in einer perspektivischen Ansicht und in Figur 9 in einer Schnittdarstellung dargestellt. Das Verbindungselement 7 weist einen zylindrischen Grundkörper 40 auf, an dessen Umfang vier gleichmäßig über den Umfang verteilte Fräsrippen 42 angeordnet sind. Auf seiner Vorderseite 12 weist das Verbindungselement 7 eine Ankeröffnung 14 auf, mit einem ersten Innengewinde 30, dass zum Außengewinde 29 des Ankerelements 11 korrespondiert, sodass das Ankerelement 11 in der Ankeröffnung 14 durch Einschrauben zug- und druckfest aufgenommen ist. Vom ersten Innengewinde 30 beanstandet ist im Grundkörper 40 ein zweites Innengewinde 41 in einer Befestigungsöffnung 15 angeordnet, die auf einer Rückseite 13 des Verbindungselements 7 offen ist und in die ein Befestigungselement 16 eingeschraubt werden kann, im Ausführungsbeispiel ein Gewindestift mit einer Mutter, der durch das Einschrauben zug- und druckfest im Verbindungselement 7 befestigt ist. Die Befestigungsöffnung 15 erstreckt sich wie die Ankeröffnung 14 konzentrisch zur Längsachse 6. Auf das Verbindungselement 7 ist an der Rückseite 13 ein Auflagerelement 9 rastend aufgesteckt. Am Auflagerelement 9 sind hierzu vier Rastelemente 37 ausgebildet, in Form von federelastischen Füßen, die nach dem Aufstecken in eine Aufnahmenut 38 des Verbindungselements 7 formschlüssig eingreifen, sodass das Auflagerelement 9 mit dem Verbindungselement 7 verliersicher verbunden ist, allerdings derart, dass das Auflagerelement 9 relativ zum Verbindungselement 7 um eine Schwenkachse 10 schwenkbar und im Ausführungsbeispiel zudem relativ zum Verbindungselement 7 um die Längsachse 6 drehbar ist. Die Schwenkachse 10 verläuft dabei quer, im Ausführungsbeispiel orthogonal zur Längsachse 6. Das Verbindungselement 7 weist an seiner dem Auflagerelement 9 zugewandten Rückseite 13 eine kalottenförmige Schwenkfläche 19 auf, auf der mehrere parallel zueinander verlaufende Rippen 20 angeordnet sind. An der Schwenkfläche 19 ist das Auflagerelement 9 schwenkbar und drehbar gelagert.

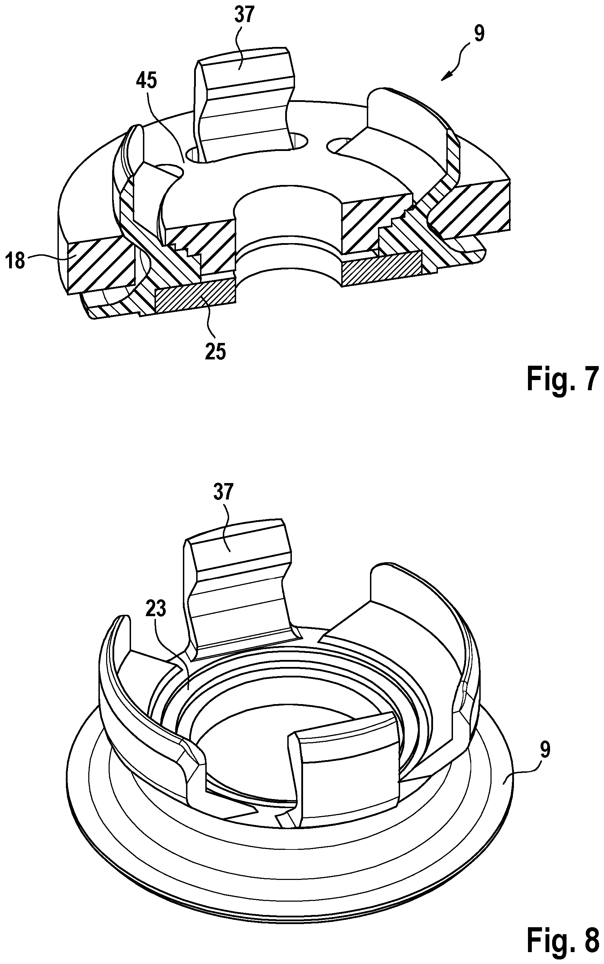

Das Auflagerelement 9 ist als eine Art Scheibe ausgebildet, mit den vier nach vorn abstehenden Rastelementen 37 und einer rückseitigen Aufnahme für die Auflagescheibe 25 aus Edelstahl. Diese Auflagescheibe 25 und die an die Rückseite der Auflagescheibe 25 angrenzende äußere Seite 21 des Auflagerelements 9 bilden gemeinsam eine Auflagefläche 8 zur flächigen Auflage des Gegenstands 2 am Abstandhalter 1. An einer inneren Seite 22 des Auflagerelements 9 ist, wie dies in Figur 7 dargestellt ist, ein Dichtelement 18 aus EPDM angeordnet, dass aus zwei konzentrischen Dichtringen besteht, die durch Verbindungsstege 45 miteinander verbunden sind. Zwischen den beiden Dichtringen und den Verbindungsstegen 45 stehen die Rastelemente 37 nach vorne über das Dichtelement 18 über. Zudem weist das Auflagerelement 9 an der im montierten Zustand der Schwenkfläche 19 zugewandten inneren Seite 22 mehrere ringförmig in Umfangsrichtung umlaufende Stufen auf, die gemeinsam ein Schneidelement bilden, das hier "erstes Schneidelement 23" genannt wird (Figur 8).

Der Abstandhalter 1 umfasst zudem eine hohlzylindrische Befestigungsscheibe 31, mit einer Anlagefläche 26 zur Anlage an einer der Auflagefläche 8 abgewandten äußeren Seite des Gegenstands 2. Zudem weist die Befestigungsscheibe 31 ein zweites Schneidelement 24 auf, das ebenfalls aus mehreren ringförmig umlaufenden Stufen gebildet wird (Figur 10).

In Figur 11 ist zudem eine Kalottenscheibe 27 des Abstandhalters 1 dargestellt, die eine Durchgangsöffnung 43 für das Befestigungselement 16 aufweist, und auf deren Kalottenfläche 28 mehrere radial von der Längsachse 6 weg verlaufende rippenartige Stege 32 ausgebildet sind.

Zur Montage des Gegenstands 2 wurden zunächst zwei Bohrungen 33 in den Baukörper 3 gebohrt, die die Putzschicht 35 und den Dämmkörper 5 durchdringen und im Verankerungsgrund 4 jeweils ein Sackloch bilden. In die beiden Sacklöcher wurde ein Klebstoff 39 eingebracht. Daraufhin wurden die beiden Gewindestangen als Ankerelemente 11 um ihre jeweilige Längsachse 6 drehend in jeweils eine der Bohrungen 33 eingebracht. Beim Einbringen ist das Ankerelement 11 in das Verbindungselement 7 eingeschraubt, sodass beide gemeinsam drehend in den Baukörper 3 eingebracht werden. Dabei fräsen die Fräsrippen 42 des Verbindungselements 7 die Putzschicht 35 und den Dämmkörper 5 auf, um Platz für das Verbindungselement 7 zu schaffen. Beim Einbringen des mit dem Ankerelement 11 verbundenen Verbindungselements 7 in den Baukörper 3 kann das Auflagerelement 9 rastend mit dem Verbindungselement 7 verbunden sein. Es kann aber auch nach dem Einbringen des Ankerelements 11 und des Verbindungselements 7 in den Baukörper 3 auf das Verbindungselement 7 aufgesteckt werden. Das aufgesteckte Auflagerelement 9 ist um die Längsachse 6 und relativ zum Verbindungselement 7 drehbar. Ist das Auflagerelement 9 beim Einbringen des Ankerelements 11 auf das Verbindungselement 7 aufgesteckt, so dreht es nicht zwangsweise mit dem Verbindungselement 7 mit. Kommt das Dichtelement 18 mit der rauen Putzschicht 35 in Berührung, so wird das Dichtelement 18 nicht zwangsweise relativ zur Putzschicht 35 bewegt und somit beim weiteren Eindrehen des Verbindungselements 7 nicht beschädigt. Durch die Schwenkbarkeit des Auflagerelements 9 relativ zum Verbindungselement 7 kann die in Figur 3 dargestellte Schrägstellung der beiden Ankerelemente 11 ausgeglichen werden, so dass die Anlageflächen 26 der beiden Auflagerelemente 9 parallel zur Putzschicht 35 ausgerichtet sind, was eine flächige Auflage des Gegenstands 2 am Auflagerelement 9 des Abstandhalters 1 ermöglicht.

Der Gegenstand 2 wurde nach der Montage des Abstandhalters 1 auf die Auflagerelemente 9 aufgesetzt, sodass er flächig auf den Auflageflächen 8 aufliegt, wobei die als Befestigungselemente 16 dienenden Gewindestifte über den Gegenstand 2 nach außen überstehen. Auf die Befestigungselemente 16 wurden jeweils eine Befestigungsscheibe 31 und eine Kalottenscheibe 27 aufgesetzt, sodass die Kalottenflächen 28 mit den zweiten Schneidelementen 24 in Kontakt kommen. Wird nun der Gegenstand 2 mit den Muttern 44 gegen die Auflageflächen 8 verspannt, so schneidet das erste Schneidelement 23 in die Rippen 20 des Verbindungselements 7 und das zweite Schneidelement 24 in die Stege 32 der Kalottenscheibe 27 ein. Die Bauteile sind somit gegeneinander fixiert und liegen flächig aneinander an. Zudem wird beim Verspannen das Dichtelement 18 von außen gegen die Putzschicht 35 gedrückt, wodurch der zwischen dem Gegenstand 2 und der Putzschicht 35 liegende Bereich um die Bohrungen 33 gegen das Eindringen von Feuchtigkeit, beispielsweise durch Schlagregen, abgedichtet ist.

Der erfindungsgemäße Abstandhalter 1 zeichnet sich durch einen einfachen und kostengünstigen Aufbau aus. Der erfindungsgemäße Abstandhalter 1 ist leicht zu montieren und gleicht Schrägstellung aus, sodass der Gegenstand 2 mit dem erfindungsgemäßen Abstandhalter 1 dauerhaft sicher an dem Baukörper 3 montiert werden kann.

### Bezugszeichenliste

- 1: Abstandhalter
- 2: Gegenstand
- 3: Baukörper
- 4: Verankerungsgrund
- 5: Dämmkörper
- 6: Längsachse
- 7: Verbindungselement
- 8: Auflagefläche
- 9: Auflagerelement
- 10: Schwenkachse
- 11: Ankerelement
- 12: Vorderseite des Verbindungselements 7
- 13: Rückseite des Verbindungselements 7
- 14: Ankeröffnung
- 15: Befestigungsöffnung
- 16: Befestigungselement
- 17: Befestigungsachse
- 18: Dichtelement
- 19: Schwenkfläche
- 20: Rippe
- 21: äußere Seite des Auflagerelements 9
- 22: innere Seite des Auflagerelements 9
- 23: erstes Schneidelement
- 24: zweites Schneidelement
- 25: Auflagescheibe
- 26: Anlagefläche
- 27: Kalottenscheibe
- 28: Kalottenfläche
- 29: Außengewinde des Ankerelements 11
- 30: erstes Innengewinde
- 31: Befestigungsscheibe
- 32: Steg
- 33: Bohrung
- 34: Außenfläche
- 35: Putzschicht
- 36: Spalt
- 37: Rastelement
- 38: Aufnahmenut
- 39: Klebstoff
- 40: Grundkörper
- 41: zweites Innengewinde
- 42: Fräsrippe
- 43: Durchgangsöffnung
- 44: Mutter
- 45: Verbindungssteg

## Patentansprüche

1. Abstandhalter (1) zur Befestigung eines Gegenstands (2) an einem Baukörper (3),
wobei der Baukörper (3) einen Verankerungsgrund (4) und einen daran angeordneten Dämmkörper (5) aufweist, und der Abstandhalter (1) derart gestaltet ist, dass er sich in einem montierten Zustand entlang einer Längsachse (6) durch den Dämmkörper (5) hindurch in den Verankerungsgrund (4) erstreckt,
wobei der Abstandhalter (1) ein Ankerelement (11) und ein Verbindungselement (7) umfasst und eine Auflagefläche (8) zur flächigen Auflage des Gegenstands (2) am Abstandhalter (1) aufweist,
wobei das Ankerelement (11) auf einer der Auflagefläche (8) abgewandten Vorderseite (12) des Verbindungselements (7) angeordnet ist, und
wobei das Verbindungselement (7) eine Ankeröffnung (14) zur Aufnahme des Ankerelements (11) aufweist, in der das Ankerelement (11) aufgenommen ist, derart, dass es zug- und druckfest mit dem Verbindungselement (7) verbunden ist,
**dadurch gekennzeichnet, dass** der Abstandhalter (1) ein Auflagerelement (9) umfasst, das die Auflagefläche (8) aufweist und das zur Montage des Abstandhalters (1) relativ zum Verbindungselement (7) um eine Schwenkachse (10) schwenkbar ist, die quer zu Längsachse (6) verläuft.

2. Abstandhalter (1) nach Anspruch 1, **dadurch gekennzeichnet, dass** das Verbindungselement (7) eine Befestigungsöffnung (15) zur Aufnahme eines Befestigungselements (16) aufweist, die sich entlang einer Befestigungsachse (17), insbesondere in Richtung oder parallel zur Längsachse (6) erstreckt, und dass das Auflagerelement (9) relativ zur Befestigungsachse (17) schwenkbar ist.

3. Abstandhalter (1) nach Anspruch 1 oder 2, **dadurch gekennzeichnet, dass** am Auflagerelement (9) ein Dichtelement (18) zur abdichtenden Anlage am Dämmkörper (5) angeordnet ist.

4. Abstandhalter (1) nach einem der Ansprüche 1 bis 3, **dadurch gekennzeichnet, dass** das Auflagerelement (9) auf das Verbindungselement (7) aufsteckbar ist, insbesondere rastend, derart, dass das Auflagerelement (9) im aufgesteckten Zustand um die Längsachse (6) drehbar und um die Schwenkachse (10) schwenkbar ist.

5. Abstandhalter (1) nach einem der Ansprüche 1 bis 4, **dadurch gekennzeichnet, dass** das Verbindungselement (7) an seiner dem Auflagerelement (9) zugewandten Rückseite (13) eine kalottenförmige Schwenkfläche (19) aufweist.

6. Abstandhalter (1) nach Anspruch 5, **dadurch gekennzeichnet, dass** auf der Schwenkfläche (19) mindestens eine Rippe (20) angeordnet ist.

7. Abstandhalter (1) nach Anspruch 5 oder Anspruch 6, **dadurch gekennzeichnet, dass** das Auflagerelement (9) eine äußere Seite (21), die der Schwenkfläche (19) abgewandt ist, als Auflagefläche (8) und eine innere Seite (22), die der Schwenkfläche (19) zugewandt ist, und mindestens ein erstes Schneidelement (23) aufweist, das insbesondere als ringförmig umlaufende Stufe ausgebildet ist.

8. Abstandhalter (1) nach einem der Ansprüche 5 bis 7, **dadurch gekennzeichnet, dass** im montierten Zustand das erste Schneidelement (23) mit der Schwenkfläche (19) in Eingriff ist.

9. Abstandhalter (1) nach einem der Ansprüche 1 bis 8, **dadurch gekennzeichnet, dass** der Abstandhalter (1) eine Auflagescheibe (25) aufweist, die zumindest einen Teil der Auflagefläche (8) bildet.

10. Abstandhalter (1) nach einem der Ansprüche 1 bis 9, **dadurch gekennzeichnet, dass** der Abstandhalter (1) eine Befestigungsscheibe (31) aufweist, mit einer Anlagefläche (26) zur Anlage an einer der Auflagefläche (8) abgewandten Seite des Gegenstands (2) und mit einer der Anlagefläche (26) abgewandten Seite mit mindestens einem zweiten Schneidelement (24), das insbesondere als ringförmig umlaufende Stufe ausgebildet ist.

11. Abstandhalter (1) nach einem der Ansprüche 1 bis 10, **dadurch gekennzeichnet, dass** der Abstandhalter (1) eine Kalottenscheibe (27) mit einer Kalottenfläche (28) aufweist, auf der insbesondere ein rippenartiger Steg (32) ausgebildet ist.

12. Abstandhalter (1) nach Anspruch 11, **dadurch gekennzeichnet, dass** die Kalottenfläche (28) dem zweiten Schneidelement (24) der Befestigungsscheibe (31) zugewandt ist, derart, dass im montierten Zustand das zweite Schneidelement (24) mit der Kalottenfläche (28) in Eingriff ist.
